(19) Europäisches Patentamt
European Patent Office
Office européen des brevets

(11) Publication number: **0 435 375 B1**

(12) **EUROPEAN PATENT SPECIFICATION**

(45) Date of publication of patent specification: **05.04.95**

(51) Int. Cl.⁶: **F16H 61/06**

(21) Application number: **90203329.9**

(22) Date of filing: **13.12.90**

(54) **Method and apparatus for determining transmission clutch and brake fill time.**

(30) Priority: **26.12.89 US 456428**

(43) Date of publication of application:
**03.07.91 Bulletin 91/27**

(45) Publication of the grant of the patent:
**05.04.95 Bulletin 95/14**

(84) Designated Contracting States:
**DE FR GB**

(56) References cited:
**EP-A- 0 230 101**
**EP-A- 0 372 073**
**WO-A-89/10281**

(73) Proprietor: **GENERAL MOTORS CORPORA-TION**
**General Motors Building**
**3044 West Grand Boulevard**
**Detroit**
**Michigan 48202 (US)**

(72) Inventor: **Lentz, Carl Albert**
**1826 Greencastle Road**
**Mooresville,**
**Indiana 46158 (US)**

(74) Representative: **Denton, Michael John et al**
**Patent Section**
**1st Floor**
**Gideon House**
**28 Chapel Street**
**Luton**
**Bedfordshire LU1 2SE (GB)**

Rank Xerox (UK) Business Services
(3.10/3.09/3.3.3)

## Description

This invention relates to a method and apparatus for determining the fill time required substantially to fill with fluid a torque transmitting device of an automatic transmission for a vehicle.

Generally, a motor vehicle automatic transmission includes a number of gear elements coupling its input and output shafts, and a related number of torque establishing devices such as clutches and brakes which are selectively engageable to activate certain gear elements for establishing a desired speed ratio between the input and output shafts. The brake can be of the band-type or disc-type. Automotive engineers commonly refer to disc-type brakes in transmissions as "clutches" or "reaction clutches". As used herein, the terms "clutches" and "torque transmitting devices" will be used to refer to brakes as well as clutches.

The input shaft is connected to the vehicle engine through a fluid coupling, such as a torque converter, and the output shaft is connected directly to the vehicle wheels. Shifting from one forward speed ratio to another is performed in response to engine throttle and vehicle speed, and generally involves releasing or disengaging the clutch (off-going) associated with the current speed ratio and applying or engaging the clutch (on-coming) associated with the desired speed ratio.

The speed ratio is defined as the transmission input speed or turbine speed divided by the output speed. Thus, a low gear range has a high speed ratio and a higher gear range has a lower speed ratio. To perform an upshift, a shift is made from a high speed ratio to a low speed ratio. In the type of transmission described below, the upshift is accomplished by disengaging a clutch associated with the higher speed ratio and engaging a clutch associated with the lower speed ratio, thereby to reconfigure the gear set to operate at the lower speed ratio. Shifts performed in the above manner are termed clutch-to-clutch shifts and require precise timing in order to achieve high quality shifting. The shift quality of a control based on calibrated or preset times is often dependent on reliable estimation of the fill time of an on-coming clutch. Fill time is the time required to fill a clutch cavity with oil. During the fill period the clutch piston strokes and the clutch plates compress. No significant clutch capacity can occur until this compression is complete. Hence, it is very important for proper clutch control during range shifting of an automatic transmission to be able to predetermine accurately the length of the fill period. Under-estimation of the fill period results in little or no clutch capacity when clutch application is required; over-estimation of the fill period results in excessive clutch pressure being applied.

It has been found that for an on-coming clutch, the fill time required to achieve torque carrying capacity is a variable, depending mainly on the size of the clutch fill volume, the fluid pump speed, and the fluid temperature. It is important to known when, after fill initiation, to expect the clutch to assume torque capacity in order to time other shift commands.

EP-A-0,372,073 discloses a method of determining the fill time required substantially to fill with fluid a torque transmitting device of an automatic transmission for a vehicle, which automatic transmission comprises a plurality of fluid pressure operated torque transmitting devices which can transmit torque when substantially filled with fluid; a pump for supplying fluid to the torque transmitting devices; a controller for sensing the rate at which fluid is supplied to a torque transmitting device by the pump, and for storing a set of values related to a base fill time representative of the time required substantially to fill with fluid a torque transmitting device of predetermined size; the method comprising the steps of determining an effective pumping rate as a function of the sensed pumping rate; and determining the fill time for the torque transmitting device as a function of the base fill time and a volume ratio factor for the torque transmitting device.

EP-A-0,230,101 discloses a shift profile management including a first fill phase whose characteristic can be adjusted. It is specified that the fill time is determined as function of the volume and the viscosity or temperature.

It is therefore an object of the invention to provide a method and apparatus for determining the fill time of a torque transmitting device.

According to an aspect of the present invention, there is provided a method of determining the fill time required substantially to fill with fluid a torque transmitting device of an automatic transmission for a vehicle as defined in claim 1.

Preferably, the method takes into account varying pump speed, fluid temperature and clutch volume.

According to another aspect of the present invention, there is provided apparatus for determining the fill time required substantially to fill with fluid a torque transmitting device of an automatic transmission for a vehicle as defined in claim 6.

An embodiment of the present invention is described below, by way of illustration only, with reference to the accompanying drawings, in which:

Figure 1a is a system diagram of a fluid operated motor vehicle transmission, including several solenoid operated fluid pressure control valves and a control unit;

Figure 1b is a table illustrating the clutch engagements required to establish the various speed ratios of the transmission of Figure 1a;

Figures 2, 3a and 3b are flow diagrams of an embodiment of method of controlling gear change by means of the controller of Figure 1a;

Figure 4 is a graph of exhaust time factor against the time since the clutch was exhausted;

Figure 5 is a graph of pump speed offset against oil temperature;

Figure 6 is a graph of base fill time against effective pumping speed; and

Figure 7 is a graph of fluid viscosity correction factor against oil temperature.

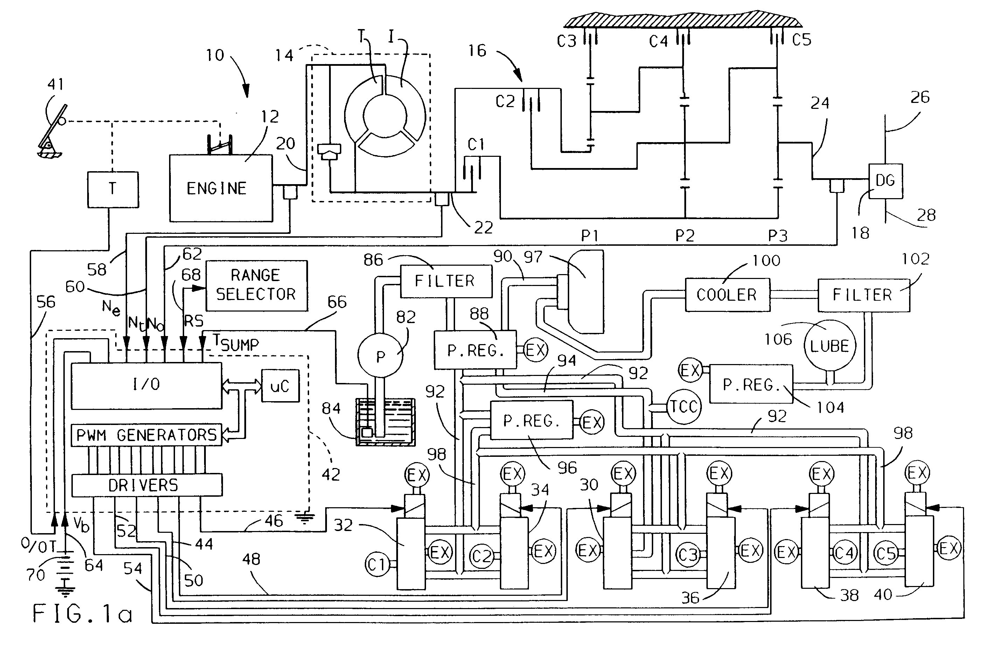

Referring now to Figure 1a, the reference numeral 10 generally designates a motor vehicle drive train which includes a throttled internal combustion engine 12, a fluidic torque converter 14, a six-speed fluid operated power transmission 16 and a differential gear set (DG) 18. The engine 12 is connected to the torque converter 14 via shaft 20, the torque converter 14 is connected to the transmission 16 via shaft 22, the transmission 16 is connected to the differential gear set 18 via shaft 24 and the differential gearset is connected to a pair of drive wheels (not shown) via the prop shafts 26 and 28.

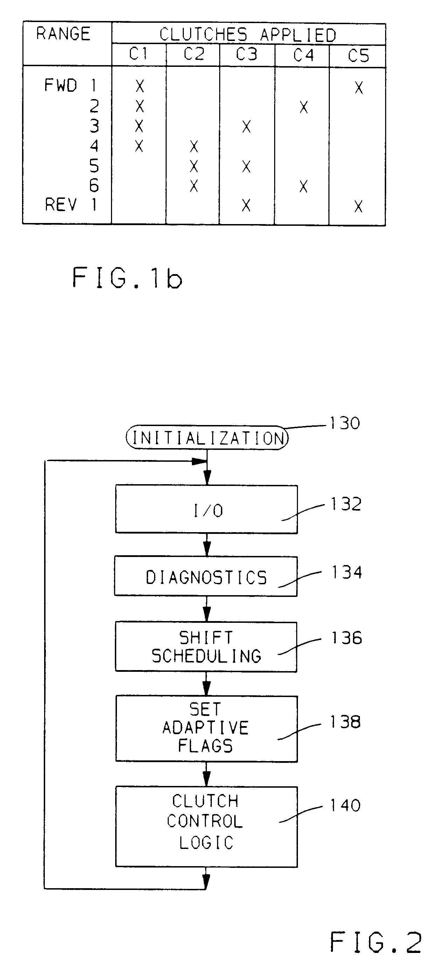

The speed and torque relationships between the engine 12 and the drive wheels of the vehicle are controlled by a fluid operated torque converter clutch, designated TCC, and five fluid operated transmission clutches, designated C1 - C5. The torque converter clutch TCC is selectively engaged by the solenoid operated control valve 30 to connect mechanically the impeller I and turbine T of torque converter 14. The clutches TCC, C1, C2, C3, C4, C5 are selectively engaged and disengaged by the solenoid operated control valves 30, 32, 34, 36, 38, 40, according to the diagram shown in Figure 1b, selectively to establish a desired transmission speed ratio. The illustrated transmission gear set provides one reverse ratio and six forward ratios, and is described in detail in U.S. Patent 4,070,927. An operator actuated accelerator pedal 41 positions the engine throttle for controlling the engine power output.

The operation of the solenoid operated control valves 30 - 40 is controlled by a computer-based control unit 42, shown in dotted outline, via lines 44 - 54 in response to various input signals representative of system parameters. Such inputs include an engine throttle position signal %T on line 56, an engine output shaft speed signal Ne on line 58, a torque converter output shaft speed signal Nt on line 60, a transmission output shaft speed signal No on line 62, a system supply voltage signal Vb on line 64, a transmission fluid temperature signal Tsump on line 66, and an operator range selector position signal RS on line 68. The system voltage is supplied by the storage battery 70, and the input signals are obtained with conventional electrical transducers such as potentiometers, thermistors and magnetic speed pickups.

Internally, the control unit 42 comprises a number of conventional devices including a microcomputer (uC) with internal clock and memory, an input/output device (I/O) and an array of pulse width modulated signal generators (PWM) and drivers (DR). As indicated below, a PWM generator and a driver (DR) are dedicated to each solenoid operated control valve 30 - 40. The PWM generator outputs are delivered to the respective drivers (DR) and are used to energize the respective solenoid operated control valves. The duty cycle of the PWM generator outputs determines the hydraulic pressure supplied by the solenoid operated control valves, with a low percent duty cycle yielding a low pressure and a high percent duty cycle yielding a high pressure for a normally closed valve.

The hydraulic circuit of transmission 16 includes a positive displacement pump 82 driven by the engine at engine speed Ne for supplying pressurized hydraulic fluid from the sump or reservoir 84, to the clutches TCC and C1 - C5 through various hydraulic and electro-hydraulic valving mechanisms. After passing through a main circuit filter 86, the fluid output of pump 82 is directed to a main pressure regulator valve 88 which develops regulated fluid pressures in lines 90 and 92.

The fluid in line 90, generally referred to as converter feed pressure, is directed through the torque converter 14, as schematically designated by the converter shell 97. After passing through a cooler 100 and cooler filter 102, the converter fluid is then regulated down to a lower pressure by the regulator valve 104 and directed to the transmission lube, or lubricant circuit 106.

The fluid in line 92, generally referred to as main or line pressure, is supplied as an input to the solenoid operated control valves 30 - 40, and also to the control pressure regulator valve 96. The control pressure regulator valve 96 develops a somewhat lower pressure in line 98, referred to herein as the control pressure, such pressure being directed to the solenoid of each control valve 30 - 40.

The fluid in line 94, referred to as the converter clutch pressure, is supplied directly by solenoid 30 to the torque converter clutch TCC to engage the same. This pressure is also supplied to the main pressure regulator valve 88 to provide a lower regulated line pressure in the converter lock-up mode.

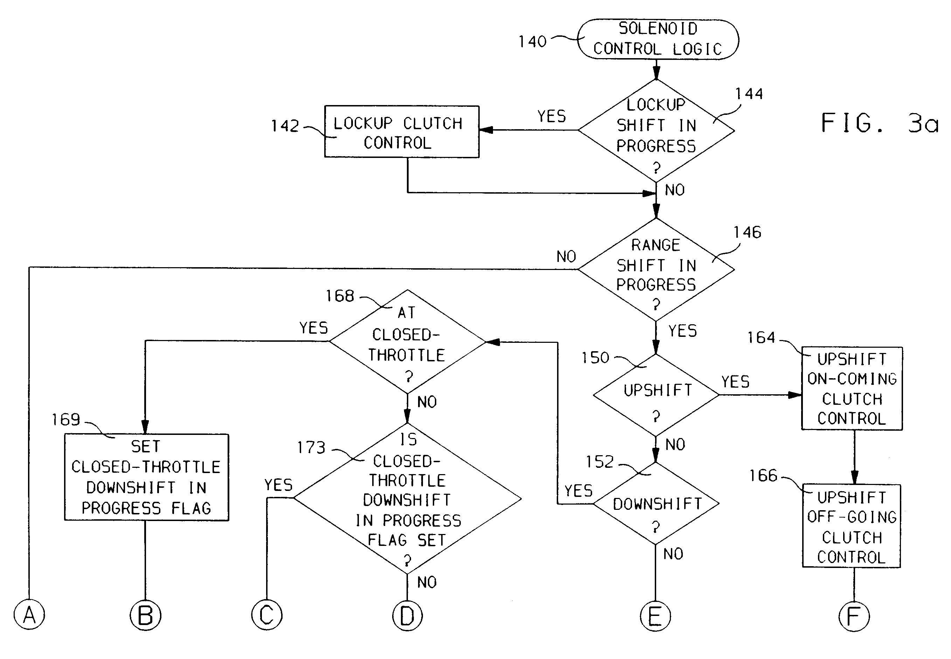

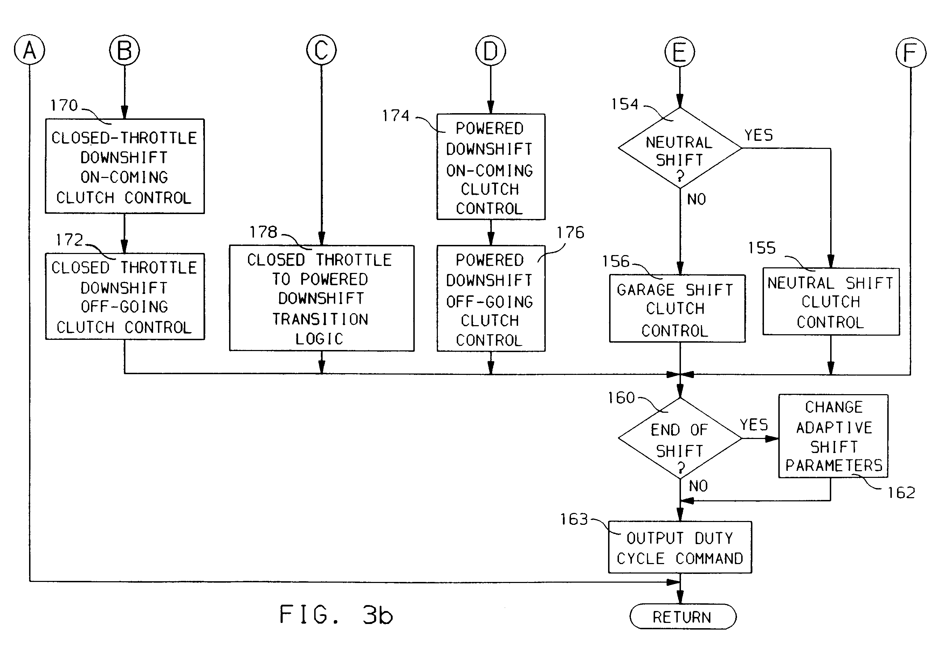

Figures 2 and 3a - 3b are flow diagrams representative of computer program instructions executed by the computer-based control unit 42 of Figure 1 in changing from one gear to another.

Figure 2 represents an executive or main loop program which directs the sequential execution of various subroutines. Block 130 designates a series of instructions executed at the initiation of each period of vehicle operation for setting the various timers, registers and variable values of control unit 42 to predetermined initial values. Thereafter, the blocks 132 - 140 are sequentially and repeatedly executed as indicated by the flow diagram lines. Block 132 reads the various input signal values and outputs the required control signals to the PWM generators and drivers for solenoid controlled valves 30 - 40. Blocks 134 - 138 contain diagnostic, shift scheduling, and adaptive flag logic. The clutch control logic block 140 analyzes the various system input signals described above in reference to Figure 1a, develops pressure command signals PCMD for application to the solenoid operated control valves at the next execution of block 132, and computes adaptive corrections based on the adaptive flags at shift completion. Block 140 also effects pulse-width-modulation of the solenoid drive voltage to carry out the pressure commands for specific shift operations. Block 140 is detailed in the flow chart of Figures 3a-3b.

The flow diagram of Figures 3a - 3b sets forth the program for making decisions as to the type of range shift in progress, if any, and determines the specific control for the on-coming and the off-going clutches. The program also checks whether a shift has performed within specifications, and if not, certain shift parameters are changed at shift completion according to predefined adaptive logic to correct the shift. First, lockup clutch control is executed ⟨142⟩ if a lockup shift is in progress ⟨144⟩. Then it is determined (from the shift schedule) whether a range shift is in progress ⟨146⟩. If not, the clutch control logic is exited. If a range shift is in progress ⟨146⟩, it is determined whether it is an upshift ⟨150⟩, a downshift ⟨152⟩, a neutral shift ⟨154⟩, or a garage shift ⟨156⟩. A garage shift is a shift from neutral to either drive or reverse, or a shift from drive to reverse or from reverse to drive. The control flows from either the upshift, downshift, neutral shift or the garage shift block to the end-of-shift test ⟨160⟩. Once the shift is completed ⟨160⟩, adaptive shift parameters are changed if required ⟨162⟩ and the duty cycle command is output ⟨163⟩. If the shift has not ended ⟨160⟩, the duty cycle command is output ⟨163⟩ before returning to the main loop of Figure 2.

If an upshift is indicated ⟨150⟩, the upshift on-coming clutch control ⟨164⟩ and the upshift off-going clutch control ⟨166⟩ are activated. If a downshift is indicated ⟨152⟩, it is next decided whether it is a closed throttle downshift or a powered downshift ⟨168⟩. If it is closed throttle, a closed throttle in progress flag is set ⟨169⟩, the closed throttle on-coming clutch control is activated ⟨170⟩ and the closed throttle off-going clutch control is activated ⟨172⟩. If the downshift is not at closed throttle ⟨168⟩, the closed throttle flag is checked ⟨173⟩. If the flag is not set, the powered downshift on-coming clutch control ⟨174⟩ and the powered downshift off-going clutch control ⟨176⟩ are activated. If the closed throttle flag is set ⟨173⟩, the throttle opened during the course of the closed throttle downshift and a transition to powered downshift may be necessary; in such case, the appropriate transition logic is invoked ⟨178⟩. If the shift is a neutral shift ⟨154⟩, the neutral shift clutch control executes shifts from drive to neutral or from reverse to neutral ⟨155⟩.

Each control phase operates by setting pressures, pressure increments, times or other values to predefined calibrated values which are herein generally called "set", "preset", "given" or "certain" values. Each such value is chosen from a table of calibrated values for each specific transmission condition, throttle range and shift type. Thus, different values are supplied for upshift, downshift, etc. as well as each range shift, e.g., 1-2, 2-1, 4-3, 5-4, etc. Converter and lockup modes may also require separate sets of calibration values.

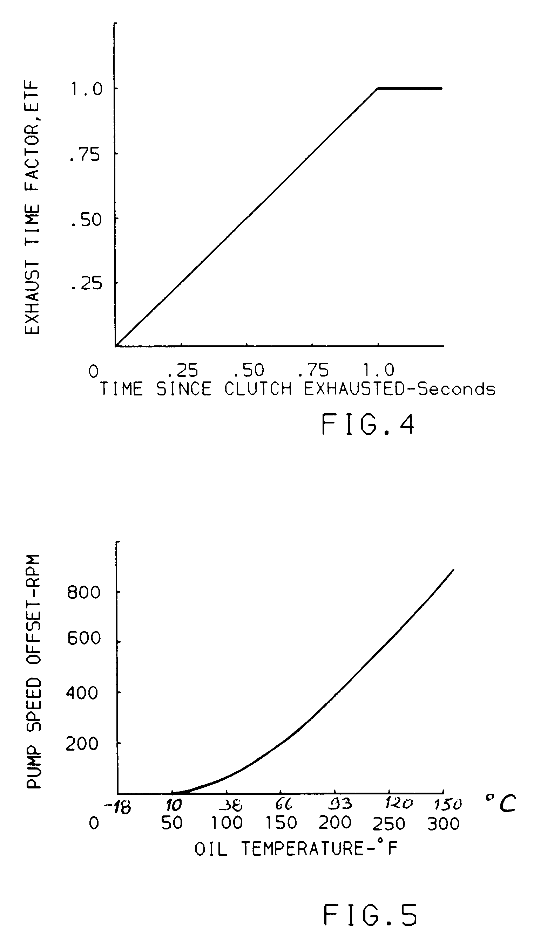

Since the time required to fill a cavity is directly proportional to the cavity volume and the various clutches may have different cavity sizes, it has been found to be convenient to calculate a "base fill time" on the basis of a baseline clutch fill volume and then convert the base fill time to each actual clutch fill time by a proportional factor called "volume ratio" (VR). Thus, the physical cavity sizes relative to the baseline clutch determine the volume ratios. The base fill time determination and the actual fill time calculations assume that the clutches are filled at 100% pressure. In addition, the base fill time is modified in this embodiment by a factor, referred to herein as the Exhaust Time Factor or ETF, which accounts for the presence of fluid retained in a clutch cavity from a previous apply period. The factor ETF approximates the percentage of clutch capacity or empty cavity space, and varies as a function of the time since the most recent exhaust command for the respective clutch, as illustrated in the graph of Figure 4. While the function is shown as linear, this is not necessarily the case.

The fill time for a given clutch is thus calculated as the product of the base fill time, the volume ratio VR and the exhaust time factor ETF. The Base Fill Time, in turn, varies according to several outside factors, primarily fluid temperature and pump speed. Low pump speed can limit the available flow of fluid and hence the time of clutch fill. Fluid leakage increases at high temperatures and reduces the effect of pump speed, at least at low pump speeds. At high pump speeds, flow restrictions become significant. This is especially true at low fluid temperatures due to the increased viscosity of the fluid.

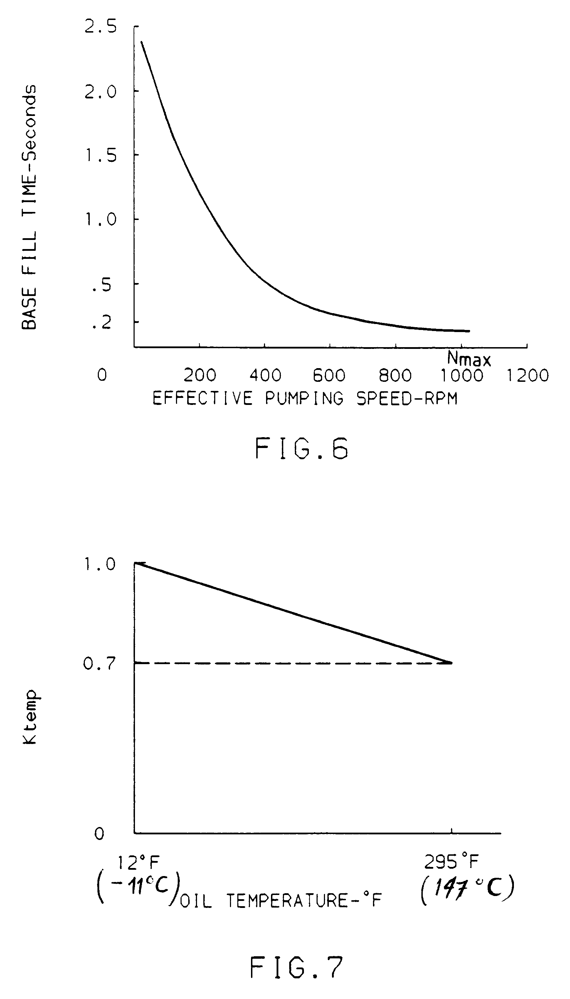

The effect of leakage as a function of temperature is determined empirically. The control provided compensates for the leakage effect by determining the effective pump speed in relation to the oil temperature. The pump speed, or offset, corresponding to the leakage is typically nonlinear, as shown in Figure 5. The effective pump speed is the measured pump speed less the offset. The relationship between effective pumping speed and base fill time is determined empirically and is shown in Figure 6 for a typical clutch. It can be seen that at relatively low speeds, the base fill time changes dramatically with effective pumping speed.

At effective pumping speeds above a predetermined value Nmax, such as 1000 RPM, the change of base fill time with speed can be ignored; instead the temperature effect on oil viscosity is taken into account. Figure 7 shows a typical temperature compensation factor, Ktemp, versus oil temperature. Ktemp varies from unity at low temperatures to 0.7 at high temperatures. This is used to adjust the fill time calculation by multiplying the base fill time at Nmax by the factor Ktemp, or Base Fill Time = [Base Fill Time at Nmax] * Ktemp.

Each of the empirically determined relationships illustrated in Figures 4 through 7, as well as the volume ratio for each clutch, are stored in the form of look-up tables and thus are convenient for rapid calculation of the fill time. The fill time calculation for a respective clutch begins with measuring the pump speed (engine speed, Ne) and the fluid temperature. The Exhaust Time Factor ETF is then determined in relation to the time since the most recent clutch exhaust command was given, as illustrated in Figure 4. The leakage offset is then determined as a function of the oil temperature, as illustrated in Figure 5, and subtracted from the measured pump speed to obtain the Effective Pumping Speed. The Base Fill Time is then determined as a function of the effective pumping speed, as illustrated in Figure 6. If the Effective Pumping Speed is above Nmax, the value of Ktemp is determined as illustrated in Figure 7, and multiplied with the Base Fill Time at Nmax to correct that value. Finally, the fill time is computed by multiplying the Base Fill Time by the Volume Ratio VR for the on-coming clutch and the Exhaust Time Factor ETF.

Reference is made to our co-pending applications EP-A-0,435,378, EP-A-0,435,373 and EP-A-0,435,401, filed and published the same day as this application.

## Claims

1. A method of determining the fill time required substantially to fill with fluid a torque transmitting device of an automatic transmission (14) for a vehicle, which automatic transmission (14) comprises a plurality of fluid pressure operated torque transmitting devices (C1-C5) having different internal sizes and which can transmit torque when substantially filled with fluid; a pump (82) for supplying fluid to the torque transmitting devices; a controller (42) for sensing the rate at which fluid is supplied to a torque transmitting device by the pump, and the fluid temperature, and for storing a set of values related to fluid temperature and pumping rate, and to a base fill time representative of the time required substantially to fill with fluid a torque transmitting device of predetermined size; the method comprising the steps of determining an effective pumping rate as a function of the sensed pumping rate and fluid temperature, the effective pumping rate being compensated for temperature dependent fluid leakages by determining the amount of fluid leakage as a function of the sensed fluid temperature and by adjusting the effective pumping rate as a function of the determined amount of fluid leakage; determining the base fill time as a function of the effective pumping rate from the set of stored values; and determining the fill time for the torque transmitting device as a function of the base fill time and a volume ratio factor for the torque transmitting device.

2. A method according to claim 1, wherein for effective pumping rates above a preset rate, the step of determining the base fill time comprises the steps of determining the base fill time at the preset rate, determining a fluid viscosity correction factor (KTemp) as a function of the sensed fluid temperature, and calculating the base fill time at the effective pumping rate by multiplying the base fill time at the preset rate by the fluid viscosity correction factor.

3. A method according to claim 1 or 2, wherein the step of determining the fill time comprises the step of multiplying the base fill time by the volume ratio factor.

4. A method according to any preceding claim, wherein the step of determining the fill time includes the steps of determining the time elapsed between the most recent discharge of fluid from the torque transmitting device and the commencement of pumping of fluid thereinto, determining the amount of residual fluid contained in the torque transmitting device as a function of the determined elapsed time; and determining the fill time as a function of the base fill time, the volume ratio factor, and the determined amount of residual fluid.

5. Apparatus for determining the fill time required substantially to fill with fluid a torque transmitting device of an automatic transmission (14) for a vehicle, which automatic transmission (14) comprises a plurality of fluid pressure operated torque transmitting devices (C1-C5) having different internal sizes and which can transmit torque when substantially filled with fluid; and a pump (82) for supplying fluid to the torque transmitting devices; the apparatus comprising a controller (42) for sensing the rate at which fluid is supplied to a torque transmitting device by the pump, and the fluid temperature, and means for storing a set of values related to fluid temperature and pumping rate and to a base fill time representative of the time required substantially to fill with fluid a torque transmitting device of predetermined size, the controller (42) being adapted to determine an effective pumping rate as a function of the sensed pumping rate and fluid temperature, to compensate for temperature dependent fluid leakages by determining the amount of fluid leakage as a function of the sensed fluid temperature and by adjusting the effective pumping rate as a function of the determined amount of fluid leakage, to determine the base fill time as a function of the effective pumping rate from the set of stored values, and to determine the fill time for the torque transmitting device as a function of the base fill time and a volume ratio factor for the torque transmitting device.

6. Apparatus according to claim 5, wherein for effective pumping rates above a preset rate, the controller (42) is adapted to determine the base fill time at the preset rate, to determine a fluid viscosity correction factor (KTemp) as a function of the sensed fluid temperature, and to calculate the base fill time at the effective pumping rate by multiplying the base fill time at the preset rate by the fluid viscosity correction factor.

7. Apparatus according to claim 5 or 6, wherein the controller (42) is adapted to determine the time elapsed between the most recent discharge of fluid from the torque transmitting device and the commencement of pumping of fluid thereinto, to determine the amount of residual fluid contained in the torque transmitting device as a function of the determined elapsed time; and to determine the fill time as a function of the base fill time, the volume ratio factor, and the determined amount of residual fluid.

**Patentansprüche**

1. Ein Verfahren zur Bestimmung der Füllzeit, die erforderlich ist, um ein Drehmoment übertragendes Gerät eines automatischen Getriebes (14) für ein Fahrzeug im wesentlichen mit Fluid zu füllen, wobei das automatische Getriebe (14) eine Vielzahl von fluiddruckbetriebenen Drehmoment übertragenden Geräten (C1 - C5), die verschiedene interne Größen aufweisen und welche Drehmoment übertragen können, wenn sie im wesentlichen mit Fluid gefüllt sind; eine Pumpe (82) zum Liefern von Fluid an die Drehmoment übertragenden Geräte; eine Steuerung (42) zum Erfassen der Rate, mit welcher Fluid an ein Drehmoment übertragendes Gerät durch die Pumpe geliefert wird, und der Fluidtemperatur, und zum Speichern eines Satzes von Werten, der auf die Fluidtemperatur und die Pumprate und auf eine Basisfüllzeit, die für die Zeit repräsentativ ist, die erforderlich ist, um ein Drehmoment übertragendes Gerät von vorbestimmter Größe im wesentlichen mit Fluid zu füllen, bezogen ist, umfaßt; und wobei das Verfahren die Schritte umfaßt, daß eine effektive Pumprate als eine Funktion der erfaßten Pumprate und der Fluidtemperatur bestimmt wird, wobei die effektive Pumprate auf temperaturabhängige Fluidleckagen kompensiert wird, indem die Größe der Fluidleckage als eine Funktion der erfaßten Fluidtemperatur bestimmt wird, und indem die effektive Pumprate als eine Funktion der bestimmten Größe der Fluidleckage eingestellt wird; die Basisfüllzeit als eine Funktion der effektiven Pumprate aus dem Satz der gespeicherten Werte bestimmt wird; und die Füllzeit für das Drehmoment übertragende Gerät als eine Funktion der Basisfüllzeit und eines Volumenverhältnisfaktors für das Drehmoment übertragende Gerät bestimmt wird.

2. Ein Verfahren nach Anspruch 1, worin für die effektiven Pumpraten oberhalb einer voreingestellten Rate der Schritt des Bestimmens der Basisfüllzeit die Schritte umfaßt, daß die Basisfüllzeit bei der voreingestellten Rate bestimmt wird, ein Fluidviskositätskorrekturfaktor (Ktemp) als eine Funktion der erfaßten Fluidtemperatur bestimmt wird, und die Basisfüllzeit bei der effektiven Pumprate berechnet wird, indem die Basisfüllzeit bei der voreingestellten Rate mit dem Fluidviskositätskorrekturfaktor multipliziert wird.

3. Ein Verfahren nach Anspruch 1 oder 2,
   worin der Schritt des Bestimmens der Füllzeit den Schritt umfaßt, daß die Basisfüllzeit mit dem Volumenverhältnisfaktor multipliziert wird.

4. Ein Verfahren nach irgendeinem vorhergehenden Anspruch,
   worin der Schritt des Bestimmens der Füllzeit die Schritte umfaßt, daß die Zeit, die zwischen der jüngsten Entladung von Fluid aus dem Drehmoment übertragenden Gerät und dem Beginn des Pumpens von Fluid dort hinein verstrichen ist, bestimmt wird, die Menge des restlichen Fluids, das in dem Drehmoment übertragenden Gerät enthalten ist, als eine Funktion der bestimmten verstrichenen Zeit bestimmt wird; und die Füllzeit als eine Funktion der Basisfüllzeit, des Volumenverhältnisfaktors und der bestimmten Größe des restlichen Fluids bestimmt wird.

5. Vorrichtung zum Bestimmen der Füllzeit, die erforderlich ist, um ein Drehmoment übertragendes Gerät eines automatischen Getriebes (14) für ein Fahrzeug im wesentlichen mit Fluid zu füllen, wobei das automatische Getriebe (14) eine Vielzahl von fluiddruckbetriebenen Drehmoment übertragenden Geräten (C1 - C5), die verschiedene interne Größen aufweisen und welche Drehmoment übertragen können, wenn sie im wesentlichen mit Fluid gefüllt sind; und eine Pumpe (82) zum Liefern von Fluid an die Drehmoment übertragenden Geräte umfaßt; und wobei die Vorrichtung umfaßt: eine Steuerung (42) zum Erfassen der Rate, mit welcher Fluid an ein Drehmoment übertragendes Gerät durch die Pumpe geliefert wird, und der Fluidtemperatur, und ein Mittel zum Speichern eines Satzes von Werten, die auf die Fluidtemperatur und die Pumprate und auf eine Basisfüllzeit bezogen sind, die für die Zeit repräsentativ ist, die erforderlich ist, um ein Drehmoment übertragendes Gerät von vorbestimmter Größe im wesentlichen mit Fluid zu füllen, wobei die Steuerung (42) dazu angepaßt ist, eine effektive Pumprate als eine Funktion der erfaßten Pumprate und der Fluidtemperatur zu bestimmen, um auf temperaturabhängige Fluidleckagen durch Bestimmung der Größe der Fluidleckage als einer Funktion der erfaßten Fluidtemperatur und durch Einstellung der effektiven Pumprate als eine Funktion der bestimmten Größe der Fluidleckage zu kompensieren, um die Basisfüllzeit als eine Funktion der effektiven Pumprate aus dem Satz gespeicherter Werte zu bestimmen, und die Füllzeit für das Drehmoment übertragende Gerät als eine Funktion der Basisfüllzeit und eines Volumenverhältnisfaktors für das Drehmoment übertragende Gerät zu bestimmen

6. Vorrichtung nach Anspruch 5,
   worin für effektive Pumpraten oberhalb einer voreingestellten Rate die Steuerung (42) dazu angepaßt ist, die Basisfüllzeit bei der voreingestellten Rate zu bestimmen, einen Fluidviskositätskorrekturfaktor (Ktemp) als eine Funktion der erfaßten Fluidtemperatur zu bestimmen, und die Basisfüllzeit bei der effektiven Pumprate durch Multiplikation der Basisfüllzeit bei der voreingestellten Rate mit dem Fluidviskositätskorrekturfaktor zu berechnen.

7. Vorrichtung nach Anspruch 5 oder 6,
   worin die Steuerung (42) dazu angepaßt ist, die Zeit zu bestimmen, die zwischen der jüngsten Entladung von Fluid aus dem Drehmoment übertragenden Gerät und dem Beginn des Pumpens von Fluid dort hinein verstrichen ist, um die Größe des restlichen Fluids, das in dem Drehmoment übertragenden Gerät enthalten ist, als eine Funktion der bestimmten verstrichenen Zeit zu bestimmen; und die Füllzeit als eine Funktion der Basisfüllzeit, des Volumenverhältnisfaktors und der bestimmten Größe des restlichen Fluids zu bestimmen.

**Revendications**

1. Procédé pour déterminer le temps de remplissage nécessaire pour remplir sensiblement de fluide un dispositif de transmission de couple d'une boîte de vitesse automatique (14) destinée à un véhicule laquelle boîte de vitesse automatique (14) comprend une pluralité de dispositifs de transmission de couple (C1 à C5) actionnés par pression de fluide, ayant différentes dimensions internes et qui peuvent transmettre un couple lorsqu'ils sont sensiblement remplis de fluide ; une pompe (82) pour fournir le fluide aux dispositifs de transmission de couple ; un régulateur (42) pour détecter le débit auquel le fluide est fourni à un dispositif de transmission de couple par la pompe, et la température du fluide, et pour mémoriser un ensemble de valeurs relatives à la température et au débit de pompage du fluide, et à un temps de remplissage de base représentatif du temps nécessaire pour remplir sensiblement de fluide un dispositif de transmission de couple d'une dimension prédéterminée ; le procédé comprenant les étapes de détermination d'un débit de pompage effectif en fonction du débit de pompage et de la température de fluide détectés, le débit de pompage effectif étant compensé pour les fuites de fluide variables avec la température, en déterminant la quantité de fuites de fluide en fonction de la température de fluide détectée et en réglant le débit de pompage effectif en fonction de la quantité déterminée de fuites de fluide ; de détermination du temps de remplissage de base en fonction du débit de pompage effectif à partir de l'ensemble de valeurs mémorisées ; et de détermination du temps de remplissage pour le dispositif de transmission de couple en fonction du temps de remplissage de base et d'un facteur de rapport volumique pour le dispositif de transmission de couple.

2. Procédé selon la revendication 1, dans lequel pour les débits de pompage effectifs supérieurs à un débit préréglé, l'étape de détermination du temps de remplissage de base comprend les étapes de détermination du temps de remplissage de base au débit préréglé, la détermination d'un facteur de correction de la viscosité du fluide (K Temp) en fonction de la température de fluide détectée, et le calcul du temps de remplissage de base à un débit de pompage effectif en multipliant le temps de remplissage de base au débit préréglé par le facteur de correction de la viscosité du fluide.

3. Procédé selon les revendications 1 ou 2, dans lequel l'étape de détermination du temps de base comprend l'étape de multiplication du temps de remplissage de base par le facteur de rapport volumique.

4. Procédé selon l'une quelconque des revendications précédentes, dans lequel l'étape de détermination du temps de remplissage comprend les étapes de détermination du temps s'étant écoulé entre la plus récente décharge de fluide depuis le dispositif de transmission de couple et le début du pompage du fluide dans celui-ci, de détermination de la quantité de fluide résiduel contenue dans le dispositif de transmission de couple en fonction du temps écoulé déterminé ; et de détermination du temps de remplissage en fonction du temps de remplissage de base, du facteur de rapport volumique et de la quantité déterminée de fluide résiduel.

5. Appareil pour déterminer le temps de remplissage nécessaire pour remplir sensiblement de fluide un dispositif de transmission de couple d'une boîte de vitesse automatique (14) destinée à un véhicule, laquelle boîte de vitesse automatique (14) comprend une pluralité de dispositifs de transmission de couple (C1 à C5) actionnés par pression de fluide, ayant des dimensions internes différentes et qui peuvent transmettre un couple lorsqu'ils sont sensiblement remplis de fluide ; et une pompe (82) pour fournir le fluide aux dispositifs de transmission de fluide ; l'appareil comprenant un régulateur (42) pour détecter le débit auquel le fluide est fourni à un dispositif de transmission de couple par la pompe, et la température du fluide, et un moyen pour mémoriser une série de valeurs relatives à la température et au débit de pompage du fluide, et à un temps de remplissage de base représentatif du temps nécessaire pour remplir sensiblement de fluide un dispositif de transmission de couple de dimension prédéterminée, le régulateur (42) étant adapté pour déterminer un débit de pompage effectif en fonction du débit de pompage et de la température de fluide détectées; pour compenser les fuites de fluide variables avec la température en déterminant la quantité de fuite de fluide en fonction de la température de fluide détectée, et en réglant le débit de pompage effectif en fonction de la quantité déterminée de fuites de fluide, pour déterminer le temps de remplissage de base en fonction du débit de pompage effectif à partir de la série de valeurs mémorisées, et pour déterminer le temps de remplissage du dispositif de transmission de couple en fonction du temps de remplissage de base et d'un facteur de rapport volumique pour le dispositif de transmission de couple.

6. Appareil selon la revendication 5, dans lequel pour les débits de pompage effectifs supérieurs à un débit préréglé, le régulateur (42) est adapté pour déterminer le temps de remplissage de base au débit préréglé, pour déterminer un facteur de correction de la viscosité du fluide (K Temp) en fonction de la température de fluide détectée, et pour calculer le temps de remplissage de base au débit de pompage effectif en multipliant le temps de remplissage de base au débit préréglé par le facteur de correction de la viscosité du fluide.

7. Appareil selon les revendications 5 ou 6, dans lequel le régulateur (42) est adapté pour déterminer le temps écoulé entre la plus récente décharge de fluide depuis le dispositif de transmission de couple, et le début du pompage de fluide dans celui-ci, pour déterminer la quantité de fluide résiduel contenue dans le dispositif de transmission de couple en fonction du temps écoulé déterminé ; et pour déterminer le temps de remplissage en fonction du temps de remplissage de base, du facteur de rapport volumique et de la quantité déterminée de fluide résiduel.

FIG. 1a

| RANGE | CLUTCHES APPLIED | | | | |
|-------|----|----|----|----|----|
|       | C1 | C2 | C3 | C4 | C5 |
| FWD 1 | X  |    |    |    | X  |
| 2     | X  |    |    | X  |    |
| 3     | X  |    | X  |    |    |
| 4     | X  | X  |    |    |    |
| 5     |    | X  | X  |    |    |
| 6     |    | X  |    | X  |    |
| REV 1 |    |    | X  |    | X  |

FIG.1b

INITIALIZATION —130

I/O —132

DIAGNOSTICS —134

SHIFT SCHEDULING —136

SET ADAPTIVE FLAGS —138

CLUTCH CONTROL LOGIC —140

FIG.2

FIG. 3a

EP 0 435 375 B1

(A)    (B)    (C)    (D)    (E)    (F)

170
CLOSED-THROTTLE
DOWNSHIFT
ON-COMING
CLUTCH CONTROL

174
POWERED
DOWNSHIFT
ON-COMING
CLUTCH
CONTROL

154
NEUTRAL
SHIFT
?
YES
NO

172
CLOSED THROTTLE
DOWNSHIFT
OFF-GOING
CLUTCH CONTROL

178
CLOSED THROTTLE
TO POWERED
DOWNSHIFT
TRANSITION
LOGIC

176
POWERED
DOWNSHIFT
OFF-GOING
CLUTCH
CONTROL

156
GARAGE SHIFT
CLUTCH
CONTROL

155
NEUTRAL SHIFT
CLUTCH
CONTROL

160
END OF
SHIFT
?
YES

162
CHANGE
ADAPTIVE
SHIFT
PARAMETERS

NO

163
OUTPUT DUTY
CYCLE COMMAND

RETURN

FIG. 3b

FIG.4

FIG.5

FIG.6

FIG.7